# FASCICULE DE BREVET EUROPEEN

(11) **EP 2 745 304 B1**
(45) Date de publication et mention de la délivrance du brevet: **03.02.2016**
(21) Numéro de dépôt: 12758563.6
(22) Date de dépôt: 10.08.2012
(51) Int. Cl.: H01H 37/76, H01R 13/68, H01R 13/713

(54) **DISPOSITIF DE SURVEILLANCE THERMIQUE DES BORNES D'UN DISPOSITIF DE CONNEXION ÉLECTRIQUE AVEC COMMUTATEUR A LA MASSE**
VORRICHTUNG ZUR WÄRMEÜBERWACHUNG DER POLE EINER GEERDETEN ELEKTRISCHEN VERBINDUNGSVORRICHTUNG
DEVICE FOR THERMAL MONITORING OF THE TERMINALS OF AN ELECTRICAL CONNECTION DEVICE WITH A SWITCH TO GROUND

(30) Priorité: 18.08.2011 FR 1157406
(43) Date de publication de la demande: 25.06.2014
(73) Titulaire: Charles, Cyril, 33390 Cars (FR)
(72) Inventeur: Charles, Cyril, 33390 Cars (FR)
(86) Numéro de dépôt international: PCT/FR2012/051882
(87) Numéro de publication internationale: WO 2013/024228

(56) Documents cités:
- WO-A1-99/33155
- WO-A1-2006/125996
- FR-A1- 2 803 122

## Description

La présente invention est relative à la surveillance thermique des bornes d'un dispositif de connexion électrique. WO 2006/125996 divulgue un appareil de protection thermique connu.

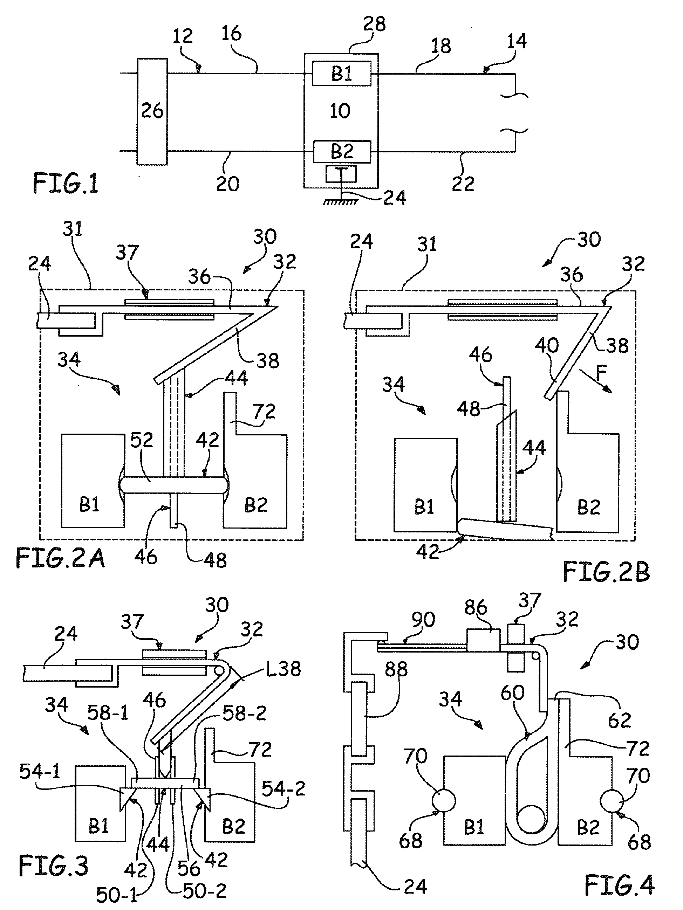

Dans l'installation électrique illustrée en figure 1, un dispositif de connexion électrique 10 permet de relier un premier circuit électrique 12 à un deuxième circuit 14 électrique.

A titre d'exemple, le premier circuit 12 est un circuit de répartition de l'installation électrique tandis que le deuxième circuit 14 est le circuit interne d'un appareil électrique alimenté par le circuit de répartition.

A cet effet, le dispositif de connexion électrique 10 comprend au moins deux bornes pour la réalisation de deux connexions : une première borne B1 permettant de connecter un premier conducteur 16 du premier circuit 12 à un premier conducteur 18 du deuxième circuit 14, et une deuxième borne B2 permettant de connecter un deuxième conducteur 20 du premier circuit 12 à un deuxième conducteur 22 du deuxième circuit 14.

De façon connue, le dispositif de connexion comporte une ou plusieurs bornes actives, chacune raccordée à un conducteur de phase transportant un courant électrique et présentant un potentiel non nul, et souvent une borne neutre, reliée à un conducteur de neutre constituant la référence de potentiel.

De plus, le dispositif de connexion électrique 10 comprend généralement une borne de protection T permettant de relier l'appareil électrique à un conducteur de protection 24, le conducteur de protection 24 permettant de conduire les fuites de courant vers une masse conductrice ayant un potentiel proche ou égal à zéro, telle une prise de terre.

On connaît de nombreux dispositifs de connexion électrique 10, prenant différentes formes selon leur utilisation et leur position dans le circuit électrique.

Ainsi, on trouve des dispositifs de connexion permettant de raccorder de manière permanente les conducteurs des différents circuits aux dispositifs de protection placés dans le tableau de répartition de l'installation.

D'autres dispositifs de connexion permettent de raccorder de manière permanente les conducteurs entre eux, dans une installation électrique ou à l'intérieur d'un appareil électrique.

Les dispositifs de connexion les plus visibles permettent de raccorder les conducteurs de l'installation aux dispositifs de branchement tels les prises ou les sorties de câble, aux interrupteurs, aux douilles d'éclairage, etc.

Enfin, on trouve aussi différents types de dispositifs de connexion dans les équipements électriques tels les rallonges électriques ou les multiprises, et plus généralement dans tous les appareils électroménagers ou industriels.

Quelle que soit leur utilisation, ces dispositifs de connexion font l'objet de normes conséquentes tant au niveau de leur qualité qu'au niveau de leur mise en oeuvre.

Toutefois, des échauffements anormaux de ces dispositifs de connexion surviennent souvent dans le temps.

Ces échauffements anormaux proviennent de l'augmentation progressive de la résistance électrique que les connexions peuvent opposer au passage du courant, s'il survient un vieillissement du dispositif de connexion.

En effet, dès sa mise en oeuvre, un dispositif de connexion présente une résistance globale correspondant à la somme de plusieurs sous-résistances. Ainsi, des premières sous-résistances sont dues à la résistivité des conducteurs et du matériau utilisé pour la réalisation du dispositif de connexion.

D'autres sous-résistances découlent du resserrement des lignes de courant, des phénomènes d'oxydation, de la surface et de la qualité de la zone de contact permettant le passage des électrons, la qualité de cette zone étant aussi liée à l'efficacité dans le temps des moyens mécaniques de maintien du contact électrique et à la température de la connexion en raison des dilatations.

Or, ces sous-résistances sont interdépendantes, et l'augmentation de l'une de ces sous-résistances a pour effet de faire augmenter par une réaction en chaîne les autres sous-résistances et donc la résistance globale des connexions.

Par exemple, une légère oxydation du cuivre (mis à nu au niveau de la connexion) va entrainer une diminution de la qualité de la surface de contact et une modification du resserrement des lignes de courant, mais aussi un léger mais inévitable échauffement par effet Joule.

Cet échauffement favorise l'accélération de l'oxydation mais aussi l'augmentation de la résistivité électrique des matériaux constituant la connexion et des conducteurs au niveau de la borne, la résistivité électrique de ces matériaux augmentant avec la température.

Ainsi, pour un même courant électrique présent dans le circuit, la connexion subit petit à petit des échauffements de plus en plus importants.

Des experts ont identifié ces échauffements anormaux comme étant la cause principale des incendies d'origine électrique.

En effet, si rien n'est prévu au niveau de la connexion pour détecter cette augmentation de température, celle-ci va augmenter de manière exponentielle.

Au cours de ces phénomènes où la température de la connexion peut atteindre des centaines de degrés, il va se créer une atmosphère propice à l'amorce d'un incendie par la transmission progressive de la chaleur à l'environnement de la connexion, par la fusion des isolants libérant des gaz, par le charbonnage des isolants, etc.

Une fois l'atmosphère propice à l'amorce de l'incendie installée, l'échauffement seul, une étincelle, ou un arc pourra entraîner la mise à feu si un matériau combustible et un comburant sont présents, ce qui finit généralement par être le cas puisque l'environnement se dégrade.

Le risque d'incendie est d'autant plus généralisé que ce phénomène peut même se produire au niveau d'une connexion d'un circuit parcouru par une faible puissance électrique.

Les connexions et les dispositifs de connexion présentent donc intrinsèquement des risques d"échauffement dangereux. Et objectivement, ces risques sont augmentés par d'autres nombreux facteurs.

Tout d'abord, un premier facteur de risque est lié au nombre de connexions puisqu'il faut réaliser des centaines de connexions pour réaliser, par exemple, une installation électrique d'une habitation.

Le facteur humain aussi est important : une petite erreur lors de la réalisation ou de la modification de l'installation pourra entraîner à terme un vieillissement prématuré du dispositif de connexion et un incendie.

Ensuite, les dispositifs de connexion se trouvant disséminés dans les recoins les plus intimes des bâtiments, la création d'une atmosphère propice à l'amorce d'un incendie pourra être insidieuse.

Les dispositifs de connexion subissent aussi dans le temps toutes sortes de sollicitations susceptibles d'augmenter les risques d'échauffement : des surtensions liées au réseau, des efforts électromagnétiques, des vibrations, des efforts de traction éventuelles si les fixations font défaut.

Enfin, pour bon nombre de dispositifs de connexion disséminés dans les bâtiments, les opérations de vérification des connexions sont en pratique irréalisables.

Actuellement, les dispositifs de protection contre les surintensités, tels les fusibles ou les disjoncteurs, prévus dans le tableau de répartition d'une installation électrique permettent de détecter un échauffement global d'un circuit et de mettre hors tension le circuit concerné.

De la même manière, certains appareils électriques sont équipés d'un fusible permettant de détecter un échauffement global du circuit interne de l'appareil et de mettre hors tension le circuit concerné.

Par ailleurs, avec un calibre de sensibilité adapté, les dispositifs de protection de type différentiel, placés dans le tableau de répartition en amont d'une installation électrique avec le disjoncteur principal, permettent de détecter et de maîtriser les défauts d'isolement, aussi appelés arcs parallèles en Amérique du Nord, pouvant survenir dans les circuits électriques ou les appareils qui y sont raccordés.

Toutefois, ces premiers dispositifs connus de protection ne permettent pas de détecter physiquement un échauffement ponctuel anormal d'une connexion électrique susceptible de créer une atmosphère propice à l'amorce d'un incendie. Selon une première solution de l'art antérieur visant à surveiller un échauffement anormal d'une connexion électrique, des inspections périodiques sont réalisées avec des caméras infrarouges pour déceler les points chauds éventuels dans une installation électrique et ainsi prévenir l'apparition d'une atmosphère propice à l'amorce d'un incendie.

Cependant, dans une installation électrique, même d'une maison particulière, des centaines de connexions sont réalisées et disséminées partout dans le bâtiment. Aussi, une telle inspection périodique est longue à mettre en oeuvre ou inenvisageable dans certains cas.

Une deuxième solution de l'art antérieur, divulguée dans le document FR 2.803.122, propose un dispositif permettant de surveiller physiquement un échauffement anormal d'une borne d'une connexion électrique.

Selon ce document FR-2.803.122, le dispositif de surveillance thermique comprend un premier élément de liaison en relation thermique et électrique avec une borne d'une connexion électrique à surveiller, un second élément de liaison en relation électrique et thermique avec un conducteur de protection, par exemple relié à la mise à la terre de l'installation, ou et des moyens de connexion électrique qui allient entre eux les premier et second éléments de liaison, ces moyens de connexion électrique étant susceptibles d'occuper deux états : un premier état, ou état normal de fonctionnement, dans lequel ils sont isolants thermique, et un second état, ou état de rupture, dans lequel ils deviennent électriquement conducteurs lorsqu'ils atteignent une température critique. Ainsi, ce dispositif de surveillance thermique permet de transmettre un courant de défaut au conducteur de protection lorsque la borne surveillée atteint la température critique, provoquant ainsi la détection du courant de défaut par les dispositifs de protection situés en amont de l'installation et donc la coupure de l'alimentation électrique du circuit concerné.

Un courant de défaut dans le conducteur de protection, ou à la terre, étant le premier phénomène vis-à-vis duquel les installations électriques sont protégées, un tel dispositif de surveillance thermique est tout à fait approprié pour prévenir l'apparition de points chauds propices à l'amorce d'un incendie. Toutefois, le dispositif présenté dans ce document FR-2.803.122 ne permet pas de réaliser simultanément la surveillance de plusieurs bornes de connexion électrique, et notamment des bornes d'un dispositif de connexion comprenant une borne active, un borne neutre et une borne de protection.

Aussi, c'est un objectif de la présente invention de pallier les inconvénients des solutions de l'art antérieur en proposant un dispositif réalisant simultanément la surveillance thermique d'au moins deux bornes d'un dispositif de connexion électrique tout en respectant les contraintes électriques relatives à l'installation électrique et à l'utilisation des circuits électriques reliés par les connexions surveillées.

A cet effet, l'invention a pour objet un dispositif de surveillance thermique d'un dispositif de connexion électrique d'une installation électrique, le dispositif de connexion comprenant au moins deux bornes à surveiller, dont au moins une borne active, permettant de relier un premier circuit électrique à un deuxième circuit électrique, le dispositif comprenant au moins un élément de mise en défaut conducteur électrique et en liaison électrique avec un conducteur de protection de l'installation électrique, et des moyens de détection d'un échauffement anormal, isolants électrique et en contact thermique avec chaque borne à surveiller, les moyens de détection empêchant chaque élément de mise en défaut d'entrer en contact électrique avec une borne active tant que ces moyens de détection ne sont pas soumis à une température seuil, et les moyens de détection libérant l'élément de mise en défaut lorsqu'ils sont soumis à une température supérieure ou égale à la température seuil de façon que cet élément de mise en défaut entre en contact électrique avec une borne active, le dispositif de surveillance thermique étant caractérisé en ce que chaque élément de mise en défaut comprend une partie fixe et une partie mobile entre une position « sans-défaut », dans laquelle elle est maintenue à distance d'une borne active par les moyens de détection, et une position « défaut » dans laquelle elle est libérée par les moyens de détection et vient en contact électrique avec une borne active. Afin de créer un défaut électrique franc, l'invention prévoit que l'élément de mise en défaut vienne en contact électrique avec une borne active, c'est-à-dire porteuse d'un courant électrique, du dispositif de connexion électrique quelle que soit la borne qui surchauffe anormalement.

Avantageusement, l'invention prévoit aussi d'interdire la mise en court-circuit des bornes surveillées par un ou plusieurs éléments de mise en défaut, et de limiter ou de moduler la valeur du courant défaut transmis au conducteur de protection.

D'autres caractéristiques et avantages ressortiront de la description qui va suivre du dispositif de l'invention, description donnée à titre d'exemple uniquement, en regard des dessins annexés sur lesquels :
- la figure 1 représente un dispositif de connexion électrique permettant de relier un premier circuit électrique à un deuxième circuit électrique,
- les figures 2A et 2B illustrent le fonctionnement d'une première variante d'un premier mode de réalisation des moyens de détection du dispositif de surveillance thermique dans un premier mode de réalisation selon l'invention,
- la figure 3 illustre une deuxième variante d'un premier mode de réalisation des moyens de détection du dispositif de surveillance thermique dans un premier mode de réalisation selon l'invention,
- la figure 4 illustre un deuxième mode de réalisation des moyens de détection du dispositif de surveillance thermique dans un premier mode de réalisation selon l'invention,
- la figure 5 illustre une première variante des moyens anti-court-circuits d'un dispositif de surveillance thermique dans un deuxième mode de réalisation selon l'invention,
- la figure 6 illustre une deuxième variante des moyens anti-court-circuits d'un dispositif de surveillance thermique dans un deuxième mode de réalisation selon l'invention,
- la figure 7 illustre une première variante des moyens anti-court-circuits d'un dispositif de surveillance thermique dans un troisième mode de réalisation selon l'invention,
- la figure 8 illustre une deuxième variante des moyens anti-court-circuits d'un dispositif de surveillance thermique dans un troisième mode de réalisation selon l'invention,
- la figure 9 illustre une première variante externe d'un boîtier d'un dispositif de surveillance thermique selon l'invention, le dispositif de surveillance étant prévu pour être raccordé en parallèle à un dispositif de connexion à surveiller,
- la figure 10 illustre un dispositif de connexion électrique, telle une prise de courant, équipée avec une première variante externe d'un boîtier d'un dispositif de surveillance thermique selon l'invention, le dispositif de surveillance étant raccordé en parallèle au dispositif de connexion à surveiller,
- la figure 11 illustre une deuxième variante externe d'un boîtier d'un dispositif de surveillance thermique selon l'invention, le dispositif de surveillance étant prévu pour être raccordé en parallèle à un dispositif de connexion à surveiller,
- la figure 12 illustre une troisième variante externe, adaptée à un branchement sur un dispositif de connexion électrique de type bornier, d'un boîtier d'un dispositif de surveillance thermique selon l'invention, le dispositif de surveillance étant prévu pour être raccordé en parallèle au dispositif de connexion à surveiller.

Le dispositif de surveillance thermique selon l'invention est destiné à équiper un dispositif de connexion électrique 10 tel qu'illustré en figure 1 et reliant un premier circuit électrique 12 à un deuxième circuit électrique 14.

A titre d'exemple, le premier circuit 12 peut être un circuit de répartition d'une installation électrique et le deuxième circuit 14 peut être le circuit interne d'un appareil électrique alimenté par le circuit de répartition.

Afin de relier le premier circuit électrique 12 au deuxième circuit électrique 14, le dispositif de connexion électrique 10 comprend au moins deux bornes à surveiller : une première borne B1 permettant de relier un premier conducteur 16 du premier circuit 12 à un premier conducteur 18 du deuxième circuit 14, et une deuxième borne B2 permettant de relier un deuxième conducteur 20 du premier circuit 12 à un deuxième conducteur 22 du deuxième circuit 14.

Selon que l'installation électrique est de type monophasé, biphasé, ou triphasé, le dispositif de connexion électrique 10 peut comporter parmi les bornes à surveiller : une, deux, ou trois bornes actives, et souvent une borne neutre.

Par borne active, l'invention entend une borne présentant un potentiel non nul, par exemple raccordée à un conducteur de phase transportant un courant électrique.

Et, par borne neutre, l'invention entend une borne présentant un potentiel sensiblement nul, par exemple raccordée à un conducteur de neutre constituant la référence de potentiel de l'installation.

Aussi, la présente invention vise à permettre la surveillance thermique des dispositifs de connexion électrique comportant deux, trois ou quatre bornes à surveiller, dont une, deux, ou trois bornes actives.

Conformément aux normes en vigueur dans la plupart des pays, le dispositif de connexion électrique 10 comprend aussi une borne de protection T, cette borne de protection T étant reliée à un conducteur de protection 24 permettant de conduire les fuites de courant vers une masse conductrice ayant un potentiel sensiblement nul, telle une prise de terre.

A titre d'exemple, dans le cas où le deuxième circuit 14 est le circuit interne d'un appareil électrique, la borne de protection T permet de relier les masses métalliques de l'appareil à la terre.

Ainsi, lorsque la borne de protection T est associée avec un dispositif de protection 26 contre les défauts d'isolement prévu en amont de l'installation, le courant de défaut évacué par le conducteur de protection 24 est détecté par le dispositif de protection 26 qui déclenche ou effectue la mise hors tension.

Le dispositif de protection 26 peut prendre la forme d'un interrupteur différentiel, d'un disjoncteur, d'un disjoncteur différentiel, ou d'un contrôleur d'isolement, selon le schéma de liaison à la terre de l'installation.

Pour sa mise en oeuvre, le dispositif de surveillance thermique 30 selon la présente invention doit être relié à un conducteur de protection 24, déjà raccordé ou non au dispositif de connexion 10 à surveiller.

En effet, le dispositif selon l'invention a pour principe général de créer un défaut électrique au niveau du dispositif de connexion 10 surveillé afin de transmettre un courant de défaut vers le conducteur de protection 24 lorsqu'un échauffement anormal est détecté.

Aussi, afin de pouvoir entraîner la mise hors tension du dispositif de connexion électrique 10 surveillé et des circuits (14,16) qu'il relie lorsqu'un échauffement anormal est détecté, le dispositif de surveillance thermique selon la présente invention doit être associé avec un dispositif de protection 26.

Ce dispositif de protection 26 dispose de ses propres moyens de coupure de l'alimentation électrique, ou il est relié à un dispositif de coupure dont il peut déclencher le fonctionnement.

Ainsi, lors de la détection d'un échauffement anormal, le dispositif de protection 26 détecte la fuite correspondant au courant de défaut créé par le dispositif de surveillance thermique 30 et assure la mise hors tension des circuits électriques (12,14) et du dispositif de connexion électrique 10 pour parer au risque d'amorce d'un incendie.

Avantageusement, un boîtier de connexion 28 constituant le dispositif de connexion électrique 10, le dispositif de surveillance thermique 30 peut être intégré au boîtier de connexion 28, ou bien réalisé dans un autre boîtier 31 rapporté sur le boîtier de connexion 28 et intercalé entre l'un des circuits électriques (12,14) et le dispositif de connexion électrique 10.

Comme illustré par les figures 2A à 8, le dispositif de surveillance thermique 30 selon l'invention comprend au moins un élément de mise en défaut 32 conducteur électrique et en liaison électrique avec le conducteur de protection 24 de l'installation électrique, directement ou par l'intermédiaire de la borne de protection T du dispositif de connexion électrique 10.

Ensuite, le dispositif de surveillance thermique 30 comprend aussi des moyens de détection 34 d'un échauffement anormal, ces moyens 34 étant isolants électrique et en contact thermique avec chaque borne (B1,B2,B3,B4) à surveiller. Selon un principe de fonctionnement commun à leurs différents modes de réalisation :
- tant que ces moyens de détection 34 ne sont pas soumis à une température seuil correspondant à un échauffement anormal, les moyens de détection 34 empêchent chaque élément de mise en défaut 32 d'entrer en contact électrique avec une borne (B1,B2,B3,B4) à surveiller, et,
- lorsque ces moyens de détection 34 sont soumis à une température supérieure ou égale à la température seuil, les moyens de détection 34 libèrent l'élément de mise en défaut 32 de façon que cet élément de mise en défaut entre en contact électrique avec une borne (B1,B2,B3,B4) à surveiller.

De préférence, dans les différents modes de réalisation des moyens de détection 34 et afin d'améliorer la détection en créant un défaut électrique franc, l'invention prévoit que l'élément de mise en défaut 32 entre en contact électrique avec une borne (B1,B2,B3,B4) active lorsqu'il est libéré par les moyens de détection (34,34-1,34-2).

En venant en contact avec une borne active (B1,B2,B3,B4), l'élément de mise en défaut 32 créé une fuite du courant vers le conducteur de protection et donc un défaut détecté par le dispositif de protection 26 prévu en amont du premier circuit électrique 12, le défaut étant alors sanctionné par la mise hors tension des circuits électriques (12,14) et du dispositif de connexion électrique 10. Toujours dans les différents modes de réalisation des moyens de détection 34, chaque élément de mise en défaut 32 comprend de préférence une partie fixe 36 et une partie mobile 38.

La partie fixe 36 est maintenue par des moyens de fixation 37 solidaires du boîtier de connexion 28 ou du boîtier 31, ces moyens de fixation 37 prenant par exemple la forme d'une pièce enserrant la partie fixe 36.

La partie mobile 38 peut se déplacer entre une position « sans-défaut », illustrée par la figure 2A ainsi que par les figures 3 à 8, dans laquelle elle est maintenue à distance d'une borne active (B1,B2,B3,B4) par les moyens de détection 34, et une position « défaut », illustrée en figure 2B, dans laquelle elle est libérée par les moyens de détection 34 et vient en contact électrique avec une borne active (B1,B2,83,B4).

Cette conception en deux parties de l'élément de mise en défaut 32 est importante car elle garantit la rapidité du contact électrique entre le conducteur de protection et la borne active, cette rapidité étant essentielle pour limiter les arcs électriques susceptibles d'entraîner une mise à feu du dispositif de surveillance thermique 30, du dispositif de connexion électrique 10 et de leur environnement, et donc pour éviter un départ d'incendie, dans une habitation par exemple.

De préférence, dans les différents modes de réalisation des moyens de détection 34, la partie mobile 38 prend la forme d'une lame ressort électriquement conductrice et bandée par les moyens de détection 34 dans la position « sans-défaut » de sorte à être maintenue à distance d'une borne active (B1,B2,B3,B4).

De préférence, la lame ressort est métallique et déformée élastiquement par les moyens de détection dans la position « sans-défaut ».

Ainsi, et comme illustré par la flèche F en figure 2B, lorsque les moyens de détection 34 libèrent l'extrémité 40 de la lame ressort, la lame ressort tend à retrouver sa forme initiale et vient en butée contre une borne active (B1,B2,B3,B4), ce qui a pour effet de créer le défaut électrique souhaité. Cette conception sous forme d'une lame ressort de la partie mobile 38 permet d'obtenir un contact mécanique brusque et violent contre une borne active (B1,B2,B3,B4) et donc un contact électrique rapide entre le conducteur de protection 24 et une borne active (B1,B2,B3,B4).

Les moyens de détection 34 peuvent prendre différentes formes.

Dans un premier mode de réalisation illustré par les figures 2A, 2B, 3 et 5 à 8, les moyens de détection 34 comprennent des moyens fusibles 42 disposés entre au moins deux bornes (B1,B2,B3,84) à surveiller et supportant au moins une gâchette 44 empêchant un élément de mise en défaut 32 d'entrer en contact électrique avec une borne active (B1,B2,B3,B4) tant que ces moyens fusibles 42 ne sont pas soumis à la température seuil.

Ensuite, et comme illustré en figure 2B, lorsque les moyens fusibles 42 fondent sous l'effet d'une température supérieure ou égale à la température seuil, cette gâchette 44 n'est plus soutenue et libère l'élément de mise en défaut 32. Avantageusement, il peut être prévu des moyens de guidage 46 permettant d'éviter que la gâchette s'interpose entre la borne active et l'élément de mise en défaut lorsqu'elle n'est plus soutenue par les moyens fusibles 42.

Comme illustré en figures 2A et 2B, ces moyens de guidage 46 peuvent prendre la forme d'un rail central 48 sur lequel coulisse la gâchette 44.

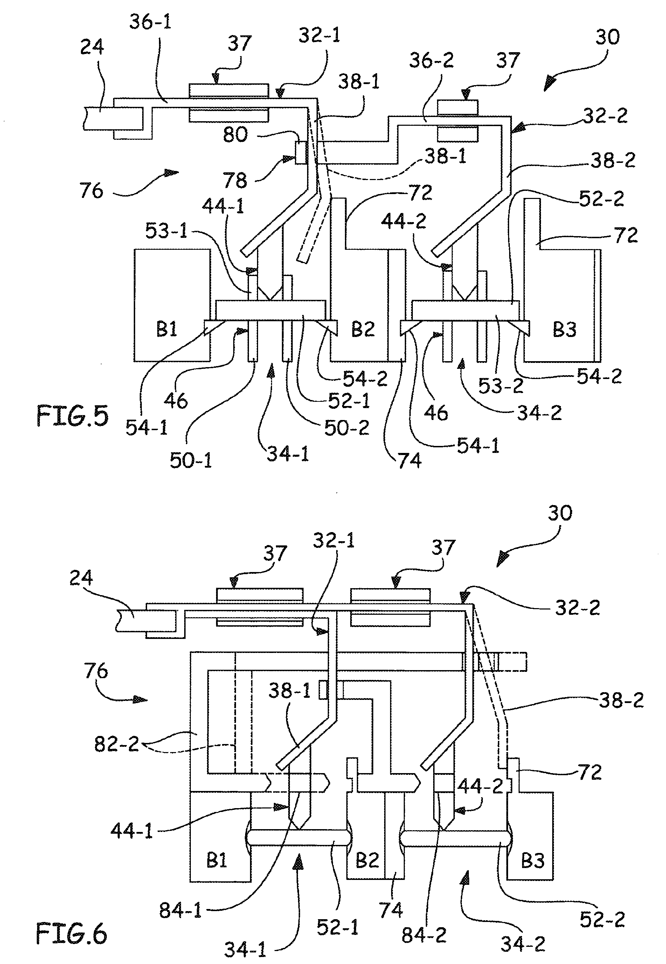

Ou, comme illustré en figure 3 et 5, ces moyens de guidage 46 sont formés par deux rampes de guidage (50-1,50-2) à l'intérieur desquelles circule la gâchette 44.

Dans une première variante du premier mode de réalisation des moyens de détection 34 illustrée en figures 2A, 2B, 6 et 8, chaque gâchette 44 est soutenue par une barrette fusible 52 calée entre deux bornes (B1,B2,B3,B4) à surveiller.

Dans cette première variante, la barrette fusible 52 peut être rectiligne ou elle peut suivre un profil courbe en arche sous la gâchette 44.

Dans une deuxième variante de ce premier mode de réalisation des moyens de détection 34 illustrée en figure 3 et 5, chaque gâchette (44,44-1,44-2) est soutenue par une barrette (53,53-1,53-2) reposant sur deux cales fusibles (54-1,54-2).

De plus, chaque cale (54-1,54-2) est rapportée, par exemple dans un logement adapté, sur une borne à surveiller et l'extrémité (58-1,58-2) de chaque barrette (53,53-1,53-2) repose sur une cale (54-1,54-2).

Dans cette deuxième variante, la barrette (53,53-1,53-2) peut aussi être rectiligne ou elle peut aussi suivre un profil courbe en arche sous la gâchette (44,44-1,44-2).

Dans un deuxième mode de réalisation illustré en figure 4, les moyens de détection (34) comprennent au moins un élément thermorétractable 60 en contact thermique avec deux bornes (B1,B2,B3,84) à surveiller, au moins une partie 62 de chaque élément thermorétractable 60 empêchant un élément de mise en défaut 32 d'entrer en contact électrique avec une borne active (B1,B2,B3,B4) tant que cet élément thermorétractable 60 n'est pas soumis à la température seuil.

De plus, cette partie 62 libère l'élément de mise en défaut 32 lorsque l'élément thermorétractable 60 se rétracte sous l'effet d'une température supérieure ou égale à la température seuil.

De préférence, cet élément thermorétractable 60 se présente sous la forme d'une boucle 64 intercalée entre deux bornes (B1,B2,B3,B4) à surveiller et comprenant une excroissance formant la partie 62 retenant/libérant l'élément de mise en défaut 32.

Afin de s'assurer que la partie 62 libère bien l'élément de mise en défaut 32 lorsque la boucle 64 se rétracte, la boucle 64 est maintenue du côté opposé où se situe la partie 62.

Par exemple, la boucle 64 est disposée autour d'un ergot fixe 66 situé à l'opposé de la partie 62.

Dans un premier mode de réalisation illustré par les figures 2A, 2B, 3 et 4, le dispositif de surveillance thermique 30 selon l'invention permet de surveiller deux bornes : une borne neutre B1 et une borne active B2.

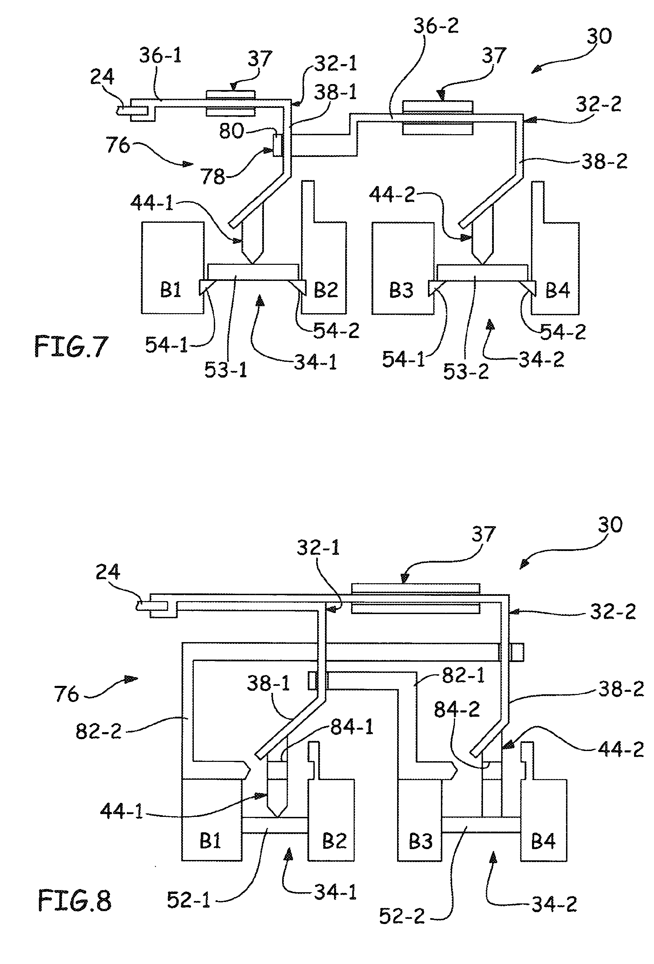

Toutefois, dans un deuxième mode de réalisation illustré par les figures 5 et 6, le dispositif de surveillance thermique 30 selon l'invention permet de surveiller trois bornes actives (B1,B2,B3), et, dans un troisième mode de réalisation illustré par les figures 7 et 8, le dispositif de surveillance thermique 30 selon l'invention permet de surveiller quatre bornes : une borne neutre B1 et trois bornes actives (B2,B3,B4).

Aussi, dans l'un ou l'autre de ces modes de réalisation du dispositif de surveillance thermique 30, les bornes (B1,B2,B3,B4) représentées sur les figures appartiennent au dispositif de connexion électrique 10 à surveiller lorsque le dispositif 30 est intégré.

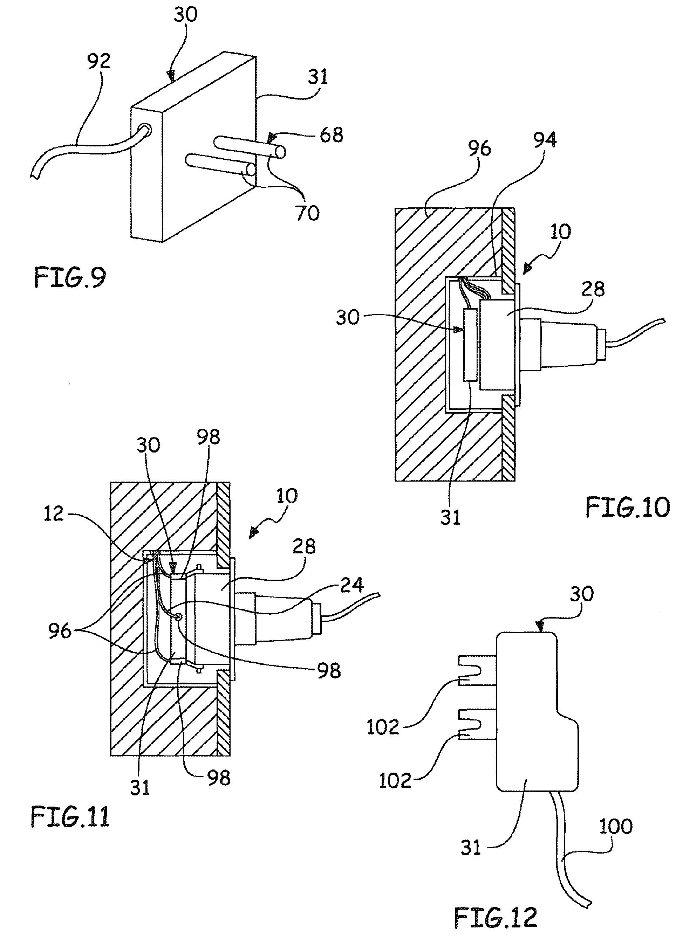

Ou, lorsque le dispositif 30 est réalisé dans un boîtier 31 rapporté sur le boîtier de connexion 28, les bornes (B1,B2,B3,84) appartiennent au dispositif 30 et sont reliées aux bornes du dispositif de connexion 10 à surveiller par des moyens de liaison électrique 68 appropriés, tels des connecteurs électriques 70 comme cela est représenté en figures 4 et 9.

Toujours dans l'un ou l'autre de ces modes de réalisation du dispositif de surveillance thermique 30, et qu'il soit intégré ou rapporté au dispositif de connexion électrique 10, chaque borne active (B1,B2,B3,B4) destinée à être en contact électrique avec un élément de mise en défaut 32 comporte une proéminence 72 s'étendant vers cet élément de mise en défaut 32.

Cette proéminence 72 permet respecter le principe de la ligne de fuite en éloignant l'extrémité 40 de la partie mobile 38 pour éviter qu'elle entre en contact électrique avec l'autre borne surveillée par les moyens de détection 34. Dans le premier mode de réalisation illustré par les figures 2A, 2B, 3 et 4, le dispositif de surveillance thermique 30 permettant de surveiller deux bornes (B1,B2), le dispositif 30 comprend un seul élément de mise en défaut 32 retenu/relâché par les moyens de détection 34 lors de la détection d'un échauffement anormal d'une des bornes (B1,B2).

Bien entendu, dans ce premier mode de réalisation, la partie mobile 38 de l'élément de mise en défaut 32, c'est à dire la lame ressort, est conçue de manière à ne pouvoir entrer en contact qu'avec la borne active B2 lorsqu'elle est libérée par les moyens de détection, ceci afin d'éviter tout risque de court-circuit entre les deux bornes actives.

Dans un deuxième mode de réalisation illustré par les figures 5 et 6, par exemple adapté pour surveiller un dispositif de connexion 10 reliant deux circuits (12,14) triphasés, le dispositif de surveillance thermique 30 permet de surveiller trois bornes actives (B1,B2,B3).

A cet effet, le dispositif 30 comprend deux éléments de mise en défaut (32-1,32-2), le premier élément de mise en défaut 32-1 étant associé aux premiers moyens de détection 34-1 placés entre la première borne B1 et la deuxième borne B2, et le deuxième élément de mise en défaut 32-2 étant associé aux deuxièmes moyens de détection 34-2 placés entre la deuxième borne B2 et la troisième borne B3.

Afin d'éviter une double mise en défaut dans le cas où un échauffement anormal de la deuxième borne B2 est détecté, un élément isolant thermique 74 est intercalé entre les deuxièmes moyens de détection 34-2 et la deuxième borne B2.

Bien entendu, l'invention couvre aussi une variante dans laquelle l'élément isolant thermique 74 est intercalé entre les premiers moyens de détection 34-1 et la deuxième borne B2.

De préférence, l'élément isolant thermique 74 est accolé à la deuxième borne B2 afin de minimiser l'encombrement du dispositif 30 selon l'invention.

Dans ce deuxième mode de réalisation du dispositif de surveillance thermique 30 selon l'invention, les premiers moyens de détection 34-1 supportent une première gâchette 44-1 retenant/libérant le premier élément de mise en défaut 32-1 et les deuxièmes moyens de détection 34-2 supportent une deuxième gâchette 44- 2 retenant/libérant le deuxième élément de mise en défaut 32-2, les deux éléments de mise en défaut (32-1,32-2) étant tous deux reliés électriquement au conducteur de protection 24.

Toujours dans ce deuxième mode de réalisation du dispositif de surveillance thermique 30 selon l'invention, chaque gâchette (44-1,44-2) est soutenue par une barrette (53-1,53-2) reposant sur deux cales fusibles (54-1,54-2) ou par une barrette fusible (52-1,52-2), la première barrette (53-1,52-1) étant calée entre la première borne B1 et la deuxième borne B2, et la deuxième barrette (53-2,52-2) étant calée entre la troisième borne B3 et l'élément isolant thermique 74 accolé à la deuxième borne B2.

Dans un troisième mode de réalisation illustré par les figures 7 et 8, par exemple adapté pour surveiller un dispositif de connexion 10 reliant deux circuits (12,14) d'une installation triphasée + neutre, le dispositif de surveillance thermique 30 permet de surveiller quatre bornes : une borne neutre B1 et trois bornes actives (B2,B3,B4).

A cet effet, le dispositif 30 comprend deux éléments de mise en défaut (32-1,32-2), le premier élément de mise en défaut 32-1 étant associé aux premiers moyens de détection 34-1 placés entre la première borne B1 et la deuxième borne B2, et le deuxième élément de mise en défaut 32-2 étant associé aux deuxièmes moyens de détection 34-2 placés entre la troisième borne B3 et la quatrième borne B4.

Dans ce troisième mode de réalisation du dispositif de surveillance thermique 30 selon l'invention, les premiers moyens de détection 34-1 supportent une première gâchette 44-1 retenant/libérant le premier élément de mise en défaut 32-1 et les deuxièmes moyens de détection 34-2 supportent une deuxième gâchette 44-2 retenant/libérant le deuxième élément de mise en défaut 32-2, les deux éléments de mise en défaut (32-1,32-2) étant tous deux reliés électriquement au conducteur de protection 24.

Toujours dans ce troisième mode de réalisation du dispositif de surveillance thermique 30 selon l'invention, chaque gâchette (44-1,44-2) est soutenue par une barrette (53-1,53-2) reposant sur deux cales fusibles (54-1,54-2) ou par une barrette fusible (52-1,52-2), la première barrette (53-1,52-1) étant calée entre la première borne B1 et la deuxième borne B2, et la deuxième barrette (53-2,52-2) étant calée entre la troisième borne B3 et la quatrième borne B4. Dans les deuxième et troisième modes de réalisation du dispositif de surveillance thermique 30 et afin d'éviter un court-circuit entre deux bornes actives par l'envoi d'un courant défaut vers le conducteur de protection 24 simultanément par le premier et le deuxième élément de mise en défaut (32-1,32-2), le dispositif de surveillance thermique 30 selon l'invention comprend des moyens anti-court-circuits 76.

Ces moyens anti-court-circuits 76 empêchent les deux éléments de mise en défaut (32-1,32-2) d'être simultanément en liaison électrique avec le conducteur de protection.

Dans une première variante illustrée par les figures 5 et 7, les moyens anti-court-circuits 76 prennent la forme d'un contact 78 mécanique et électrique entre la partie fixe (36-1,36-2) d'un élément de mise en défaut (32-1,32-2) et la partie mobile (38-1,38-2) de l'autre élément de mise en défaut (32-1,32-2). Dans cette première variante, l'un des éléments de mise en défaut (32-1,32-2) est relié au conducteur de protection 24 par l'intermédiaire de l'autre élément de mise en défaut.

Comme illustré en pointillés sur la figure 5, la partie mobile (38-1,38-2) ouvre le contact 78 mécanique et électrique lorsqu'elle est libérée par les moyens de détection (34-1,34-2) correspondants.

Dans l'exemple représenté par les figures 5 et 7, la partie fixe 36-2 du deuxième élément de mise en défaut 32-2 comprend une butée latérale 80 contre laquelle la partie mobile 38-1 du premier élément de mise en défaut 32-1 est maintenue en appui par les premiers moyens de détection 34-1.

Ensuite, lorsque les premiers moyens de détection 34-1 libèrent le premier élément de mise en défaut 32-1, la partie mobile 38-1 de celui-ci s'éloigne de la butée latérale 80 et coupe ainsi le contact électrique entre le deuxième élément de mise en défaut 32-2 et le conducteur de protection 24.

Dans une deuxième variante illustrée par les figures 6 et 8, les moyens de détection (34-1,34-2) comprenant deux gâchettes (44-1,44-2) empêchant chacune un élément de mise en défaut correspondant (32-1,32-2) d'entrer en contact électrique avec une borne active (B1,B2,B3,B4), les moyens anti-court-circuits 76 comprennent deux loquets (82-1,82-2), chaque loquet (82-1,82-2) étant solidaire d'un élément de mise en défaut (32-1,32-2).

Par la suite, les moyens anti-court-circuits 76 comprennent aussi des ouvertures (84-1,84-2) traversant chaque gâchette (44-1,44-2), le loquet (82-1,82-2) solidaire d'un premier élément de mise en défaut (32-1,32-2) coulissant dans l'ouverture (84-1,84-2) de la gâchette (44-1,44-2) empêchant le deuxième élément de mise en défaut (32-1,32-2) d'entrer en contact électrique avec une borne active (B1,B2,B3,B4) lorsque le premier élément de mise en défaut (32-1,32-2) est libéré par les moyens de détection (34-1,34-2).

Plus précisément, chaque loquet (82-1,82-2) est relié à la partie mobile (38-1,38-2) d'un élément de mise en défaut (32-1,32-2) de manière à être entraîné en translation au travers de l'ouverture (84-1,84-2) de la gâchette (44-1,44-2) retenant/libérant l'autre élément de mise en défaut (32-1,32-2).

Dans cette deuxième variante, grâce au fonctionnement indépendant de chaque loquet (82-1,82-2), les deux éléments de mise en défaut (32-1,32-2) peuvent être reliés directement et en permanence au conducteur de protection 24.

Dans l'exemple représenté sur les figures 6 et 8, le premier loquet 82-1 est relié à la partie mobile 38-1 du premier élément de mise en défaut 32-1, et le deuxième loquet 82-2 est relié à la partie mobile 38-2 du deuxième élément de mise en défaut 32-2.

Comme illustré en pointillés en figure 6, lorsque la partie mobile 38-2 du deuxième élément de mise en défaut 32-2 est relâchée par la deuxième gâchette 44-2, le deuxième loquet 82-2 est entraîné au travers de l'ouverture 84-1 de la première gâchette 44-1.

Ainsi, la première gâchette 44-1 se trouve bloquée et ne peut plus libérer la partie mobile 38-1 du premier élément de mise en défaut 32-1 même si les moyens de détection 34-1 fondent suite à un échauffement anormal de la première borne B1 ou de la deuxième borne B2.

En complément dans l'un quelconque des modes de réalisation de l'invention et comme illustré en figure 4, le dispositif de surveillance thermique 30 peut comprendre au moins une résistance électrique 86 limitant le courant de défaut transmis par un élément de mise en défaut (32-1,32-2) au conducteur de protection 24.

Cette limitation du courant de défaut est nécessaire pour éviter des dégradations du dispositif 30 lorsqu'il est placé dans une installation électrique dans laquelle circule une intensité de courant importante.

Bien entendu, la résistance est placée en série entre le ou les éléments de mise en défaut (32-1,32-2) et le conducteur de protection 24.

Avantageusement, le dispositif de surveillance thermique peut aussi comprendre un fusible de sécurité 88 monté en série avec la résistance électrique 86, ou bien une résistance fusible, entre chaque élément de mise en défaut (32-1,32-2) et le conducteur de protection (24).

Ce fusible de sécurité 88, ou la résistance fusible, permet d'effectuer la coupure du courant de défaut dans le cas où le dispositif de protection 26 situé en amont ne déclenche pas et avant qu'un échauffement supplémentaire trop important soit généré par le passage du courant de défaut.

Enfin, et aussi pour éviter un échauffement supplémentaire trop important dû au passage du courant de défaut, le dispositif de surveillance thermique 30 peut comprendre un interrupteur bilame 90 monté en série avec la résistance électrique 86, le fusible 88, et/ou la résistance fusible.

Pour sa mise en oeuvre au niveau d'un dispositif de connexion électrique 10, le dispositif de surveillance thermique 30 peut prendre différentes formes dont des exemples sont représentés par les figures 9 à 12.

Comme précisé précédemment, le dispositif de surveillance thermique 30 peut être intégré au boîtier de connexion 28 constituant le dispositif de connexion électrique 10, ou bien il peut être réalisé dans un boîtier 31 rapporté sur le boîtier de connexion 28 et intercalé entre l'un des circuits électriques (12,14) et le dispositif de connexion 10.

Selon une première variante externe d'un boîtier 31 illustré en figures 9 et 10, le dispositif de surveillance thermique 30 est agencé dans le boîtier 31 avec des connecteurs 70 extérieurs destinés à être en contact avec les bornes (B1,B2,B3,B4) du dispositif de connexion électrique 10 à surveiller, un autre connecteur extérieur 92 étant prévu pour relier le dispositif 30 au conducteur de protection 24 de l'installation.

Comme illustré en figure 10, le dispositif de surveillance thermique 30 est raccordé en parallèle à une prise de courant à surveiller, le boîtier 31 étant rapporté à l'arrière du boîtier de connexion 28, par exemple à l'intérieur du logement 94 réalisé dans un mur 96 pour recevoir le dispositif de connexion électrique 10.

Dans une deuxième variante externe du boîtier 31 illustrée en figure 11, le boîtier 31 est intercalé en parallèle sur les câbles 96 du premier circuit 12.

A cet effet, le boîtier 31 comprend des éléments de jonction extérieurs 98 dans lesquels sont insérés les câbles 96, au moins un élément 98 étant réservé au branchement du connecteur de protection 24.

Dans ces deux variantes du boîtier 31, le dispositif 30 est protégé et facilement intégré de manière permanente à l'installation, et cela sans être visible.

Dans une troisième variante externe illustrée en figure 12 et adaptée à un branchement en parallèle sur un dispositif de connexion électrique de type bornier, disjoncteur principal, ou bornier d'un moteur par exemple, le boîtier 31 comprend des connecteurs extérieurs spécifiques 102 destinés à venir s'enficher sur un bornier, un autre connecteur extérieur 100 étant prévu pour raccorder le dispositif 30 au conducteur de protection 24 de l'installation.

La présente invention couvre aussi un dispositif de connexion électrique 10 équipé d'un dispositif de surveillance thermique 30, intégré ou rapporté dans un boîtier 31, dans l'un des modes de réalisation précédemment décrits.

## Revendications

1. Dispositif de surveillance thermique (30) d'un dispositif de connexion électrique (10) d'une installation électrique, le dispositif de connexion (10) comprenant au moins deux bornes (B1,B2,B3,B4) à surveiller, dont au moins une borne active, permettant de relier un premier circuit électrique (12) à un deuxième circuit électrique (14), le dispositif (30) comprenant au moins un élément de mise en défaut (32,32-1,32-2) conducteur électrique et en liaison électrique avec un conducteur de protection (24) de l'installation électrique, et des moyens de détection (34,34-1,34-2) d'un échauffement anormal, isolants électrique et en contact thermique avec chaque borne (B1,B2,B3,B4) à surveiller, les moyens de détection (34,34-1,34-2) empêchant chaque élément de mise en défaut (32,32-1,32-2) d'entrer en contact électrique avec une borne active (B1,B2,B3,B4) tant que ces moyens de détection (34,34-1,34-2) ne sont pas soumis à une température seuil, et les moyens de détection (34,34-1,34-2) libérant l'élément de mise en défaut (32,32-1,32-2) lorsqu'ils sont soumis à une température supérieure ou égale à la température seuil de façon que cet élément de mise en défaut (32,32-1,32-2) entre en contact électrique avec une borne active (B1,B2,B3,B4), le dispositif de surveillance thermique (30) étant **caractérisé en ce que** chaque élément de mise en défaut (32,32-1,32-2) comprend une partie fixe (36,36-1,36-2) et une partie mobile (38,38-1,38-2) entre une position « sans-défaut », dans laquelle elle est maintenue à distance d'une borne active (B1,B2,B3,B4) par les moyens de détection (34,34-1,34-2), et une position « défaut » dans laquelle elle est libérée par les moyens de détection (34,34-1,34-2) et vient en contact électrique avec une borne active (B1,B2,B3,B4).

2. Dispositif de surveillance thermique (30) selon la revendication 1, **caractérisé en ce que** la partie mobile (38,38-1,38-2) prend la forme d'une lame ressort électriquement conductrice et bandée par les moyens de détection (34,34-1,34-2) dans la position « sans-défaut » de sorte à être maintenue à distance d'une borne active (B1,B2,B3,B4).

3. Dispositif de surveillance thermique (30) selon la revendication 1 ou 2, **caractérisé en ce que** les moyens de détection (34,34-1,34-2) comprennent au moins un élément thermorétractable (60) en contact thermique avec deux bornes (B1,B2,B3,B4) à surveiller, au moins une partie (62) de chaque élément thermorétractable (60) empêchant un élément de mise en défaut (32,32-1,32-2) d'entrer en contact électrique avec une borne active (B1,B2,B3,B4) tant que cet élément thermorétractable (60) n'est pas soumis à la température seuil, et cette partie (62) libérant l'élément de mise en défaut (32,32-1,32-2) lorsque l'élément thermorétractable (60) se rétracte sous l'effet d'une température supérieure ou égale à la température seuil.

4. Dispositif de surveillance thermique (30) selon la revendication 1 ou 2, **caractérisé en ce que** les moyens de détection (34,34-1,34-2) comprennent des moyens fusibles (42) disposés entre au moins deux bornes (B1,B2,B3,B4) à surveiller et supportant au moins une gâchette (44,44-1,44-2) empêchant un élément de mise en défaut (32,32-1,32-2) d'entrer en contact électrique avec une borne active (B1,B2,B3,B4) tant que ces moyens fusibles (42) ne sont pas soumis à la température seuil, cette gâchette (44,44-1,44-2) n'étant plus soutenue et libérant l'élément de mise en défaut (32,32-1,32-2) lorsque les moyens fusibles (42) fondent sous l'effet d'une température supérieure ou égale à la température seuil.

5. Dispositif de surveillance thermique (30) selon la revendication 4, **caractérisé en ce que** chaque gâchette (44,44-1,44-2) est soutenue par une barrette fusible (52,52-1,52-2) calée entre deux bornes (B1,B2,B3,B4) à surveiller.

6. Dispositif de surveillance thermique selon la revendication 4, **caractérisé en ce que** chaque gâchette (44,44-1,44-2) est soutenue par une barrette (53,53-1,53-2) reposant sur deux cales fusibles (54-1,54-2), chaque cale (54-1,54-2) étant rapportée sur une borne à surveiller et l'extrémité (58-1,58-2) de chaque barrette (53,53-1,53-2) reposant sur une cale (54-1,54-2).

7. Dispositif de surveillance thermique (30) selon l'une des revendications 1 à 6, le dispositif de connexion électrique (10) comprenant au moins trois bornes actives (B1,B2,B3,B4), et le dispositif de surveillance (30) comprenant au moins deux éléments de mise en défaut (32-1,32-2) en liaison électrique avec le conducteur de protection (24), **caractérisé en ce qu'**il comprend des moyens anti-court-circuits (76) permettant d'éviter que les deux éléments de mise en défaut (32-1,32-2) soient simultanément en liaison électrique avec le conducteur de protection (24).

8. Dispositif de surveillance thermique (30) selon la revendication 7, **caractérisé en ce que** les moyens anti-court-circuits (76) prennent la forme d'un contact (78) mécanique et électrique entre la partie fixe (36-1,36-2) d'un élément de mise en défaut (32-1,32-2) et la partie mobile (38-1,38-2) de l'autre élément de mise en défaut (32-1,32-2), la partie mobile (38-1,38-2) ouvrant le contact (78) mécanique et électrique lorsqu'elle est libérée par les moyens de détection (34-1,34-2) correspondants.

9. Dispositif de surveillance thermique (30) selon la revendication 7, les moyens de détection (34-1,34-2) comprenant deux gâchettes (44-1,44-2) empêchant chacune un élément de mise en défaut correspondant (32-1,32-2) d'entrer en contact électrique avec une borne active (B1,B2,B3,B4), **caractérisé en ce que** les moyens anti-court-circuits (76) comprennent deux loquets (82-1,82-2), chaque loquet (82-1,82-2) étant solidaire d'un élément de mise en défaut (32-1,32-2), et des ouvertures (84-1,84-2) traversant chaque gâchette (44-1,44-2), le loquet (82-1,82-2) solidaire d'un premier élément de mise en défaut (32-1,32-2) coulissant dans l'ouverture (84-1,84-2) de la gâchette (44-1,44-2) empêchant le deuxième élément de mise en défaut (32-1,32-2) d'entrer en contact électrique avec une borne active (B1,B2,B3,B4) lorsque le premier élément de mise en défaut (32-1,32-2) est libéré par les moyens de détection (34-1,34-2).

10. Dispositif de surveillance thermique (30) selon l'une des revendications 1 à 9, **caractérisé en ce qu'**il comprend une résistance électrique (86) limitant le courant de défaut transmis par un élément de mise en défaut (32-12,32-2) au conducteur de protection (24).

11. Dispositif de surveillance thermique (30) selon la revendication 10, **caractérisé en ce qu'**il comprend un fusible de sécurité (88) monté en série avec la résistance électrique (86), ou une résistance fusible, entre chaque élément de mise en défaut (32-1,32-2) et le conducteur de protection (24).

12. Dispositif de surveillance thermique (30) selon la revendication 10 ou 11, **caractérisé en ce qu'**un interrupteur bilame (90) est monté en série avec la résistance électrique (86), le fusible (88), et/ou la résistance fusible.

13. Dispositif de connexion électrique (10) comprenant au moins deux bornes (B1,B2,B3,B4) à surveiller permettant de relier un premier circuit électrique (12) à un deuxième circuit électrique (14), le dispositif de connexion électrique (10) étant équipé d'un dispositif de surveillance thermique (30) selon l'une des revendications précédentes, intégré au dispositif de connexion électrique (10) ou rapporté dans un boîtier (31).

## Patentansprüche

1. Eine thermische Überwachung (30), einer Einrichtung Elektrischer Anschluss (10) einer elektrischen Anlage, wobei die Vorrichtung aus Verbindung (10) mit mindestens zwei Anschlüssen (B1, B2, B3, B4) zu überwachen, einschließlich mindestens ein aktives Terminal, zum Verbinden einer ersten Schaltung 5 elektrisch (12) mit einer zweiten elektrischen Schaltung (14), Vorrichtung (30) umfassend mindestens ein Element, das in Verzug gesetzt wird (32,32-1,32-2) Treiber elektrische in Verbindung mit einem Schutzleiter (24) der elektrischen Anlage , und eine Erfassungseinrichtung (34,34-1,34-2) Überhitzung, elektrischen Isolatoren und in Wärmekontakt mit jedem Terminal 10 (B1, B2, B3, B4) zu überwachende, die Detektionsmittel (34,34-1,34-2) verhindert jede Element, das in Verzug setzt (32,32-1,32-2) zu kontaktieren Leistung mit einem aktiven Anschluß (B1, B2, B3, B4), so daß diese Erfassungsmittel (34,34-1,34-2) sind nicht auf eine Schwellentemperatur ist, und Mittel Detektion (34,34-1,34-2) Freigeben des Element das in Verzug setzt (32,32-1,32-2), wenn auf eine Temperatur größer oder gleich der Temperatur unterworfen Schwellenwert, so dass ein Element dass in Verzug setzt (32,32-1,32-2) in kommt einen elektrischen Kontakt mit einem aktiven Anschluß (B1, B2, B3, B4), wobei die Vorrichtung aus thermische Überwachung (30), **dadurch gekennzeichnet, dass** jedes Stellelement fehlerhaft (32,32-1,32-2) einen festen Teil (36,36-1,36-2) und einen beweglichen Teil 20 (38,38-1,38-2) zwischen einer Position "nicht dokumentiert Defekt ", bei dem es sich in einem Abstand von einem aktiven Anschluß (B1, B2, B3, B4) mittels beibehalten Erkennung (34,34-1,34-2) und "Fehler" Position, in der es freigegeben wird durch die Erfassungseinrichtung (34,34-1,34-2) und in elektrische Berührung kommt eine aktive Klemme (B1, B2, B3, B4).

2. Eine thermische Überwachung (30) nach Anspruch 1, **dadurch gekennzeichnet, dass** das bewegliche Teil (38,38-1,38-2) die Form eines Schaufel und elektrisch leitende Feder mittels bandagierten Detektion (34,34-1,34-2) in der Position "kein-Fehler", um sein in einem Abstand von einem aktiven Anschluß (B1, B2, B3, B4) gehalten.

3. Eine thermische Überwachung (30) nach Anspruch 1 oder 2, **dadurch gekennzeichnet, dass** die Erfassungseinrichtung (34,34-1,34-2) zum in umfassen mindestens einer wärmeschrumpfbaren Element (60) in thermischen Kontakt mit beiden Klemmen (B1, B2, B3, B4) zu überwachen, wobei mindestens ein Abschnitt (62) jedes Elements Shrink (60) ein Element, dass in Verzug setzt zu verhindern (32,32-1,32-2) um einen elektrischen Kontakt mit einem aktiven Anschluß (B1, B2, B3, B4), so daß dieser zu machen wärmeschrumpfbare Teil (60) nicht an der Schwellentemperatur ausgesetzt ist, und dies Teil (62), Freigeben des Elements das in Verzug setzt (32,32-1,32-2), wenn das Element Schrumpf (60) zurückzieht, unter der Wirkung einer Temperatur größer oder gleich der Temperaturschwelle.

4. Eine thermische Überwachung (30) nach Anspruch 1 oder 2, **dadurch gekennzeichnet, dass** die Erfassungseinrichtung (34,34-1,34-2) umfaßt Sicherungsmittel (42) zwischen mindestens zwei Klemmen (B1, B2, B3, B4) angeordnet ist, um Überwachung und Unterstützung der mindestens einen Auslöser (44,44-1,44-2) verhindert Ausschnittelement (32,32-1,32-2) einen elektrischen Kontakt zu machen, ein aktives Endgerät (B1, B2, B3, B4), so daß die Sicherungseinrichtung (42) nicht an die Schwellentemperatur vorgelegt, der Auslöser (44,44-1,44-2) nicht mehr nachhaltige und Loslassen der Elements das in Verzug setzt (32,32-1,32-2), wenn Sicherungseinrichtung (42) unter der Wirkung einer Temperatur größer als oder gleich zu schmelzen Temperaturschwelle.

5. Eine thermische Überwachung (30) nach Anspruch 4, **dadurch gekennzeichnet, daß** jede Zuhaltung (44,44-1,44-2) durch ein unterstütztes Sicherungsleiste (52,52-1,52-2) gespannt zwischen zwei Anschlüssen (B1, B2, B3, B4) an überwachen.

6. Eine thermische Überwachungssystem nach Anspruch 4, **dadurch gekennzeichnet, daß** jede Zuhaltung (44,44-1,44-2) durch ein unterstütztes bar (53,53-1,53-2) basierend auf zwei Sicherungsblöcke (54-1,54-2), die jeweils Einstellscheibe (54-1,54-2) auf einem Terminal-Monitor und dem Ende hinzugefügt (58-1,58-2) jedes Streifens (53,53-1,53-2) basierend auf einem Shim (54-1,54-2).

7. Eine thermische Überwachung (30) nach einem der Ansprüche 1 bis 6, wobei die elektrische Verbindungsvorrichtung (10), die zum in wenigstens drei aktiven Endgeräte (B1, B2, B3, B4), und die Überwachungsvorrichtung (30), umfassend wenigstens zwei ausgeschnittene Elemente (32-1,32-2) in Assoziation mit dem elektrischen Schutzleiter (24), **dadurch gekennzeichnet**, enthält anti-Kurzschluß Einrichtung (76) zum Vermeiden, dass die beiden Elements das in Verzug setzt (32-1,32-2) gleichzeitig in Verbindung Elektro mit dem Schutzleiter (24).

8. Eine thermische Überwachung (30) nach Anspruch 7, **dadurch gekennzeichnet, dass** die Anti-Kurzschlusseinrichtung (76) die Form eines zu nehmen Kontakt (78) mechanisch und elektrisch zwischen dem feststehenden Abschnitt (36-1,36-2) aus einem Ausschnitt Glied (32-1,32-2) und dem beweglichen Abschnitt (38-1,38-2) des anderen Cut-Out Element (32-1,32-2), der bewegliche Teil (38-1,38-2) Öffnen der Kontakt (78) mechanisch und elektrisch, wenn sie mit Hilfe des freigesetzten Detektion (34-1,34-2) Korrespondenten.

9. Eine Thermoüberwachung (30) nach Anspruch 7, die Erfassungsmittel (34-1,34-2) mit zwei Zuhaltungen (44-1,44-2) jedes verhindert eine entsprechende Element das in Verzug setzt (32-1,32-2) in elektrischen Kontakt mit einem aktiven Anschluß (B1, B2, B3, B4), dadurch gekommen **dadurch gekennzeichnet, dass** die Anti-Kurzschluß Einrichtung (76) aus zwei Latches (82-von 1,82 bis 2), wobei jede Klinke (82-1,82-2) solidarisch mit einem ausgeschnittenen Element(32-1,32-2) und Öffnungen (84-1,84-2) durch jeden Stift (44-1,44-2) der Riegel (82-1,82-2), der mit einem ersten Elements das in Verzug setzt (32-1, 32-2) Gleiten in der Öffnung (84-1,84-2) des Auslösers (44-1,44-2) Verhinderung des zweiten Elements das in Verzug setzt (32-1,32-2) einzugeben einen elektrischen Kontakt mit einem aktiven Anschluss (B1, B2, B3, B4), wenn die erste Elements das in Verzug setzt (32-1,32-2) durch die Erfassungsmittel freigesetzt ist (34-1,34-2).

10. Eine thermische Überwachung (30) nach einem der Ansprüche 1 bis 9, **dadurch gekennzeichnet, dass** es einen Widerstand elektrische (86) die Begrenzung der Fehlerstrom übertragen von einem Stellglied Defekt (32-12,32-2) mit dem Schutzleiter (24).

11. Eine thermische Überwachung (30) nach Anspruch 10, **dadurch gekennzeichnet, daß** sie eine Schmelzsicherung (88) in Reihe geschaltet umfasst der elektrische Widerstand (86) oder ein Sicherungswiderstand zwischen jedem Elements das in Verzug setzt (32-1,32-2) und den Schutzleiter (24).

12. Eine thermische Überwachung (30) nach Anspruch 10, oder 11, **dadurch gekennzeichnet, daß** ein Bimetall streifen Schalter (90) ist in Reihe mit dem montierten elektrischen Widerstand (86) die Sicherung (88) und / oder die Sicherung Widerstand.

13. Eine elektrische Verbindungsvorrichtung (10) umfassend mindestens zwei Anschlüsse (B1, B2, B3, B4) zum Verbinden einer ersten Schaltung überwacht werden elektrisch (12) mit einer zweiten elektrischen Schaltung (14), die Verbindungsvorrichtung Elektrischer Verbinder (10) mit einer Vorrichtung zur Temperaturüberwachung ausgestattet (30) einem der vorhergehenden Ansprüche, in die Verbindungsvorrichtung integrierte elektrische (10) oder in einem Gehäuse (31) befestigt ist.

## Claims

1. Thermal monitoring device (30) of an electrical connection device (10) of an electrical installation, the connection device (10) comprising at least two terminals (B1, B2, B3, B4) to be monitored, including at least one active terminal, allowing connecting a first electrical circuit (12) to a second electrical circuit (14), the device (30) is comprising at least one default setting element (32,32-1,32-2) electrical conductor and electrically connected to a protective conductor (24) of the electrical installation, and detecting means (34,34-1,34-2) of an overheating, electrical insulators and in thermal contact with each terminal (B1, B2, B3, B4) to be monitored, the detection means (34,34-1,34-2) preventing each default setting element (32,32-1,32-2) to be in contact with an active terminal (B1, B2, B3, B4) until these detection means (34,34-1,34-2) are not subject to a threshold temperature, and detection means (34,34-1,34-2) releasing the default setting element (32,32-1,32-2) when subjected to a temperature greater than or equal to the threshold temperature so that the default element (32,32-1,32-2) comes into electrical contact with an active terminal (B1, B2, B3, B4), the thermal monitoring device (30) being **characterized in that** each faulty setting element (32,32-1,32-2) comprises a fixed part (36,36-1,36-2) and a mobile part (38,38-1,38-2) between a "no-fault" position, in which it is maintained at a distance of an active terminal (B1, B2, B3, B4) by detection means (34,34-1,34-2) and a "defect" position wherein it is released by the detecting means (34,34-1,34-2) and comes into electrical contact with an active terminal (B1, B2, B3, B4).

2. Thermal monitoring device (30) according to claim 1, **characterized in that** the mobile part (38,38-1,38-2) takes the form of an electrically conductive spring blade bandaged by detection means (34,34-1,34-2) in the position "no-fault" so as to be maintained at a distance of an active terminal (B1, B2, B3, B4).

3. Thermal monitoring device (30) according to claim 1 or 2, **characterized in that** the detecting means (34,34-1,34-2) comprises at least one heat-shrinkable element (60) in thermal contact with two terminals (B1, B2, B3, B4) to be monitored, with at least a portion (62) of each heat-shrinkable element (60) preventing a default layout element (32,32-1,32-2) to make electrical contact with an active terminal (B1, B2, B3, B4) until this heat-shrinkable element (60) is not subjected to the threshold temperature, and this part (62) releasing the default setting element (32,32-1,32-2) when the heat-shrinkable element (60) retracts under the effect of a temperature greater than or equal to the temperature threshold.

4. Thermal monitoring device (30) according to claim 1 or 2, **characterized in that** the detecting means (34,34-1,34-2) comprises fuse means (42) disposed between at least two terminals (B1, B2, B3, B4) to monitor and supporting at least one trigger (44,44-1,44-2) preventing a default setting element (32,32-1,32-2) to make electrical contact with an active terminal (B1, B2, B3, B4) so that the fuse means (42) are not submitted to the threshold temperature, the trigger (44,44-1,44-2) being no longer sustained and releasing the default layout element (32,32-1,32-2) when fuse means (42) melt under the effect of a temperature greater than or equal to the threshold temperature.

5. Thermal monitoring device (30) according to claim 4, **characterized in that** each trigger (44, 44-1, 44-2) is supported by a fuse strip (52,52-1,52-2) clamped between two terminals (B1, B2, B3, B4) to be monitored.

6. Thermal monitoring device according to claim 4, **characterized in that** each trigger (44,44-1,44-2) is supported by a bar (53,53-1,53-2) placed on two fuse blocks (54-1,54-2), each block (54-1,54-2) being added on a terminal monitor and the end (58-1,58-2) of each strip (53,53-1,53-2) placed on a blocks (54-1,54-2).

7. Thermal monitoring device (30) according to one of claims 1 to 6, the electrical connection device (10) comprising at least three active terminals (B1, B2, B3, B4), and the monitoring device (30) comprising at least two default setting elements (32-1,32-2) in association with the electrical protective conductor (24), **characterized in that** it includes anti-short-circuit means (76) for avoiding that the two default setting elements (32-1,32-2) are simultaneously in electric connection with the protective conductor (24).

8. Thermal monitoring device (30) according to claim 7, **characterized in that** the anti-short-circuit means (76) take the form of a contact (78) mechanically and electrically between the fixed portion (36-1,36-2) of a default setting element (32-1,32-2) and the movable portion (38-1,38-2) of the other default setting element (32-1,32-2), the movable part (38-1,38-2) opening the contact (78) mechanically and electrically when it is released by means of corresponding detection (34-1,34-2).

9. Thermal monitoring device (30) according to claim 7, the detection means (34-1,34-2) including two triggers (44-1,44-2) each preventing a corresponding default setting element (32-1,32-2) to come into electrical contact with an active terminal (B1, B2, B3, B4), **characterized in that** the anti-short-circuit means (76) comprises two latches (82-1.82-2), each latch (82-1,82-2) being combined with a default setting elements (32-1,32-2), and openings (84-1,84-2) through each pin (44-1,44-2), the latch (82-1,82-2) combined with a first default setting element (32-1.32-2) sliding in the opening (84-1,84-2) of the trigger (44-1,44-2) preventing the second default setting element (32-1,32-2) to enter in electrical contact with an active terminal (B1, B2, B3, B4) when the first default setting element (32-1,32-2) is released by the detection means (34-1,34-2).

10. Thermal monitoring device (30) according to one of claims 1 to 9, **characterized in that** it comprises an electrical resistor (86) limiting the fault current transmitted by a setting default device (32-12,32-2) to the protective conductor (24).

11. Thermal monitoring device (30) according to claim 10, **characterized in that** it includes a safety fuse (88) connected in series with the electrical resistor (86) or a fuse resistance between each element of default setting (32-1,32-2) and the protective conductor (24).

12. Thermal monitoring device (30) according to claim 10 or 11, **characterized in that** a bimetallic switch (90) is mounted in series with the electrical resistor (86), the fuse (88) and / or the fuse resistance.

13. Electrical connection device (10) comprising at least two terminals (B1, B2, B3, B4) to be monitored for connecting a first electrical circuit (12) to a second electrical circuit (14), the connecting electrical connector device (10) being equipped with a temperature monitoring device (30) according to one of the preceding claims, integrated into the connecting electrical device (10) or deported in a box (31).
